# EUROPEAN PATENT SPECIFICATION

(11) **EP 4 477 678 B1**
(45) Date of publication and mention of the grant of the patent: **24.12.2025**
(21) Application number: 23179042.9
(22) Date of filing: 13.06.2023
(51) Int. Cl.: C08F 8/12, C08F 8/30, C08L 33/24, C08L 33/26

(54) **HYDROXAMIC ACID-MODIFIED EMULSION COMPOSITION BASED ON POLYACRYLAMIDE AND THE METHOD FOR PREPARING THEREOF**
HYDROXAMSÄUREMODIFIZIERTE EMULSIONSZUSAMMENSETZUNG AUF POLYACRYLAMIDBASIS UND VERFAHREN ZUR HERSTELLUNG DAVON
COMPOSITION D'ÉMULSION MODIFIÉE PAR DE L'ACIDE HYDROXAMIQUE À BASE DE POLYACRYLAMIDE ET SON PROCÉDÉ DE PRÉPARATION

(43) Date of publication of application: 18.12.2024
(73) Proprietor: ITS Water Group SA, 1204 Geneva (CH)
(72) Inventor: SOPINA, Nina, Dnipro (UA); GORDIIENKO, Viktor, Zaporizhzhia (UA); BOLHAR, Denys, Yuzhne (UA); SHAPOVAL, Oleksandr, Dnipro (UA); FEDOSEIENKO, Mykhailo, Dnipro (UA); OSTREYKO, Yevgen, Dnipro (UA)
(74) Representative: KATZAROV S.A.

(56) References cited:
- CN-A- 103 819 592
- CN-B- 103 524 757
- US-A- 4 767 540

## Description

### FIELD OF THE INVENTION

The present invention relates to the mining and metallurgical industry, namely to materials and reagents used in the technological process of alumina production by the Bayer method.

### BACKGROUND OF THE INVENTION

The worldwide alumina production is based on processing high-quality bauxite using the Bayer method. This method is the most economical. In addition to the obvious advantages, the method involves bauxites with a low content of iron oxide minerals, silica, calcium and magnesium carbonates, pyrite and other impurities. According to the Bayer method, bauxite is crushed and subjected to wet grinding. The resulting pulp, consisting of a reversible solution and crushed bauxite particles, is a polydisperse suspension. As a result of leaching this pulp in autoclaves, a concentrated aluminate solution is obtained. It is contaminated with particles insoluble in an alkaline environment containing hydrated forms of iron (red mud) and sodium aluminosilicates. These particles are hydrophilic, which is why they are poorly aggregated, extremely slow to settle and poorly compacted during normal settling. That is, cleaning the aluminate solution requires the use of suspension separation methods.

Among the generally known industrial methods of suspension separation, the intensification method, which is based on the deposition of solid pulp particles under the action of weight, has found a practical application for the separation of red mud. Polyacrylamide-based flocculants are added to the Bayer process to increase the rate of separation of the solid phase from the aluminate solution. They have a high anionic charge density formed due to the high degree of hydrolysis of the high-molecular polymer. As a result of preliminary hydrolysis of the polymer, the amide group is replaced with a carboxyl group, which can form a bond with iron-containing minerals through the calcium bridge, forming floccules for rapid precipitation of small particles.

Thus, US 4171296 A discloses a method for hydrolysis of polyacrylamide emulsion by interacting it with a highly alkaline reagent, sodium hydroxide, for 18 hours. Another method for producing hydrolysed polyacrylamide emulsion is disclosed in US 4283507 A, according to which the product is obtained at elevated temperature and pressure. The disadvantages of these disclosures are the complexity of the production technology and the low efficiency of the aluminate solution clarification. Therefore, partially or completely modified hydroxamic acid polyacrylamide polymers are used to improve the clarification of the aluminate solution. They can form strong polydentate complexes with iron oxide centres on the surface of ultrafine mineral particles.

Currently, there are several methods to obtain polyacrylamide flocculants with functional hydroxamic groups. All these methods have a single concept - as a result of synthesis, it is necessary to ensure the presence of hydroxamic and carboxyl groups in the polymer composition, with a partial residue of amide groups. The ratio of hydroxamic, carboxyl and amide groups may vary depending on the technological process parameters and the composition of the raw material.

CA 1332996 C discloses a method for obtaining an aqueous solution of a polymer with a high degree of hydroxamation of polyacrylamide with a low content of carboxyl groups at an optimal combination of temperature and pH. The disadvantages of this disclosure are that according to the given technology, the product contains mainly hydroxamic and amide groups, while to achieve a high rate of solid phase precipitation and clarification of the aluminate solution, it is necessary to have a balanced amount of carboxyl, hydroxamic and amide groups.

CN 103819592 A discloses a method that avoids the disadvantage of the previous disclosures and provides a process in which hydrolysis and hydroxamation of polyacrylamide occur simultaneously. However, the disadvantage of the proposed technology is that the resulting product is an aqueous solution with a low solid phase content, which complicates transportation and requires large storage areas. It is possible to increase the content of the solid phase by manufacturing a flocculant in the form of an emulsion.

CN 101591415 A discloses an emulsion of hydroxamic acid-modified polyacrylamide obtained by the polymerization of monomers in an acidic environment using non-neutralized hydroxylamine hydrochloride as a hydroxamating agent. The main disadvantage of this method is the relatively low reaction rate, which increases when the temperature rises to ~90°C, which can lead to delamination of the emulsion.

The method of preparation of hydroxamic acid-modified polyacrylamide polymer emulsion, disclosed in CN 109180862 A, includes preparation of propylene hydroxamic acid monomer; mixing with acrylamide and acrylic acid; pH correction by adding ammonia water and polymerization with the initiator. The disadvantage of this method is the use of ammonia water to neutralize acrylic acid while increasing the pH, which leads to an increase in the degree of dissociation of monomeric and formed polymer ions. This causes an electrostatic barrier to the convergence of anionic particles, as a result of which the rate of radical copolymerization reaction slows down, so to accelerate it, the temperature of the reaction mixture rises to 80°C and the isothermal exposure time increases, which leads to a decrease in the stability of the emulsion.

Another method is disclosed in CN 101632879 B, which first performs copolymerization of acrylic acid with acrylamide, and then hydroxamation of reactive groups of the resulting polymer. At the same time, the pre-copolymerization process is intended to obtain polymers with polyacrylate sites that cannot be modified by hydroxamic groups but interact with calcium-containing areas of the surface of red mud particles and polyamide chains with centres reactive to the addition of hydroxamic groups, which have the property of active flocculation of ultrafine particles with a high content of iron-containing minerals due to the formation of stable polydentate complexes between hydroxamic acid and iron. Thus, this modified polyacrylamide emulsion can simultaneously bind mud particles with different content of iron oxide minerals. The disadvantage of this method is the excessively high consumption of hydroxylamine-containing reagents due to the dilution of the system with polyacrylate groups, which become an electrostatic and steric barrier to the reaction of nucleophilic substitution of amide groups for hydroxamic ones. Since this method is implemented through pre-polymerization using initiators with subsequent hydroxamation, which leads to a stable ratio of hydroxamic, acrylate and amide groups in synthesis products, it cannot ensure the preservation of high clarification and precipitation rates in cases of changes in the technological process parameters and the transition to bauxite with a different mineralogical composition. The characteristics of the emulsion produced using this technology and the working solutions obtained on its basis cannot be adjusted, since the production method does not have a stage for selecting a system of stabilizing substances. CN103524757B discloses a process for the preparation of hydroxamic acid modified polyacrylamides comprising the steps of polymerization of acrylamide with acrylic acid, modification into a hydroxamic by reaction with hydroxylamine and phase inversion of the polymer and their use as flocculant in the Bayer process, US4767540A discloses inverse emulsions made of, aqueous polyacrylamide or acrylamide/acrylic acid copolymers dispersed in oil can be reacted directly with hydroxylamine or its salt to give very high molecular weight polymers containing hydroxamic acid groups , and discloses the transformation of various copolymers having various degrees of hydroxamation and discloses the hydroxamation of a copolymer of acrylamide and acrylic acid and its use as flocculant in the Bayer process.

Consequently, there is still a need for improved compositions and methods for manufacturing the hydroxamic acid-modified emulsion composition based on polyacrylamide, without disadvantages of previous disclosures.

### SUMMARY OF THE INVENTION

An aspect of the present invention, as defined by the appended claims, provides a method for preparing hydroxamic acid-modified emulsion composition based on polyacrylamide, the method comprising
1) preparing a first emulsion polyacrylamide product with a high content of carboxyl functional groups by alkaline hydrolysis of high-anionic polyacrylamide emulsion followed by addition of an oil phase and an emulsifier;
2) preparing a second emulsion polyacrylamide product by contacting a hydroxylamine-containing compound with a non-ionic or low-anionic polyacrylamide emulsion in an alkaline medium, preferably having pH 11.0 ± 1.5, followed by addition of an oil phase and an emulsifier, wherein the hydroxylamine-containing compound is selected from hydroxylamine hydrochloride, hydroxylamine acetate, hydroxylamine propionate, hydroxylamine sulphate, and hydroxylamine free base, and wherein the hydroxylamine-containing compound is preliminary mixed with water, an oil phase and a hydrophobic non-ionic emulsifier before contacting with the non-ionic or low-anionic polyacrylamide emulsion;
3) mixing the first emulsion product with the second emulsion product to obtain a emulsion composition;
4) inverting the emulsion composition with hydrophilic non-ionic surfactants and adding a stabilizing mixture.

Another aspect of the present invention provides a method for preparing hydroxamic acid-modified emulsion composition based on polyacrylamide, wherein the method is carried out in one reactor, wherein the method comprises
1) preparing an emulsion polyacrylamide product with a high content of carboxyl groups is by alkaline hydrolysis of high-anionic polyacrylamide emulsion containing an oil phase and a hydrophobic emulsifier;
2) in an alkaline medium, preferably having pH 11.0 ± 1.5, sequentially adding to the emulsion polyacrylamide product of step 1) an aqueous solution of a hydroxylamine-containing compound, a non-ionic or low-anionic polyacrylamide emulsion and an oil phase with an emulsifier to obtain the emulsion composition, wherein the hydroxylamine-containing compound is selected from hydroxylamine hydrochloride, hydroxylamine acetate, hydroxylamine propionate, hydroxylamine sulphate, and hydroxylamine free base;
3) adjusting temperature at 20.0 ± 5.0 °C and adding hydrophilic surfactants to the emulsion composition to invert the phases of the emulsion composition, followed by adding a stabilizing mixture.

A further aspect of the present invention provides a hydroxamic acid-modified emulsion composition based on polyacrylamide consisting of (wt. %):
- a mixture of emulsion polyacrylamide products: 35% - 80%
- an oil phase and an emulsifier: 5% - 50%
- a stabilizer mixture: 15% - 50%,
   wherein
- the mixture of emulsion polyacrylamide products consists of
   ∘ a first emulsion polyacrylamide product with a high content of carboxyl functional groups prepared by alkaline hydrolysis of high-anionic polyacrylamide emulsion followed by addition of an oil phase and an emulsifier;
   ∘ a second emulsion polyacrylamide product prepared by contacting a hydroxylamine-containing compound with a non-ionic or low-anionic polyacrylamide emulsion in an alkaline medium followed by addition of an oil phase and an emulsifier, wherein the hydroxylamine-containing compound is selected from hydroxylamine hydrochloride, hydroxylamine acetate, hydroxylamine propionate, hydroxylamine sulphate, and hydroxylamine free base, and wherein the hydroxylamine-containing compound is preliminary mixed with water, an oil phase and a hydrophobic non-ionic emulsifier before contacting with the non-ionic or weakly anionic polyacrylamide emulsion; and
   wherein the ration of the second emulsion polyacrylamide product and the first emulsion polyacrylamide product is 1:4 to 1:1;
- the oil phase and the emulsifier are in the ratio from 40:1 to 5:1.

### DETAILED DESCRIPTION OF THE INVENTION

As used herein, the term "carboxyl functional groups" (or "COOH") are a combination of two functional groups attached to a single carbon atom, namely, hydroxyl (single-bonded OH) and carbonyl (double bonded O) groups.

The present invention aims to improve a composition and a method for manufacturing the hydroxamic acid-modified emulsion composition based on polyacrylamide, and thereby eliminate the disadvantages of previous disclosures, such as reduce the consumption of hydroxylamine-containing reagent; create an opportunity to achieve the optimal ratio of hydroxamic/carboxyl/amide groups to ensure the necessary indicators of the aluminate solution clarification at a relatively high precipitation rate; provide better physical and chemical parameters of the emulsion and the working solutions obtained on its basis, such as the absence of separation, easy pumping and dosing, stability during storage of the emulsion in changing temperature conditions, speed of production and shelf life of working solutions.

The present invention proposes a rational scheme to reduce the consumption of the reagent for hydroxamation. Indeed, an emulsion of polyacrylamide with a low degree of anionic charge density is added to a hydrophobic emulsion of a hydroxylamine-containing substance, in contrast to the known methods according to which a hydroxylamine-containing substance is added to a polyacrylamide emulsion. Further, due to the separation of hydroxamation and hydrolysis processes, conditions are provided for varying the optimal ratio of hydroxamic/carboxyl/amide groups, which in turn contributes to improving the quality of the aluminate solution clarification at a relatively high precipitation rate. The present invention also provides improving the quality of physical and chemical parameters of the emulsion composition by introducing a stabilizing mixture consisting of non-ionic surfactants, alkali metal salts and weak and strong dibasic inorganic acids, and polyols organic compounds.

An aspect of the present invention provides a method for preparing hydroxamic acid-modified emulsion composition based on polyacrylamide, the method comprising
1) preparing a first emulsion polyacrylamide product with a high content of carboxyl functional groups by alkaline hydrolysis of high-anionic polyacrylamide emulsion followed by addition of an oil phase and an emulsifier;
2) preparing a second emulsion polyacrylamide product by contacting a hydroxylamine-containing compound with a non-ionic or low-anionic polyacrylamide emulsion in an alkaline medium, preferably having pH 11.0 ± 1.5, followed by addition of an oil phase and an emulsifier, wherein the hydroxylamine-containing compound is selected from hydroxylamine hydrochloride, hydroxylamine acetate, hydroxylamine propionate, hydroxylamine sulphate, and hydroxylamine free base, and wherein the hydroxylamine-containing compound is preliminary mixed with water, an oil phase and a hydrophobic non-ionic emulsifier before contacting with the non-ionic or low-anionic polyacrylamide emulsion;
3) mixing the first emulsion product with the second emulsion product to obtain the emulsion composition;
4) inverting the emulsion composition with hydrophilic non-ionic surfactants and adding a stabilizing mixture.

Another aspect of the present invention provides a method for preparing hydroxamic acid-modified emulsion composition based on polyacrylamide, wherein the method is carried out in one reactor, wherein the method comprises
1) preparing an emulsion polyacrylamide product with a high content of carboxyl groups by alkaline hydrolysis of high-anionic polyacrylamide emulsion containing an oil phase and a hydrophobic emulsifier;
2) in an alkaline medium, preferably having pH 11.0 ± 1.5, sequentially adding to the emulsion polyacrylamide product of step 1) an aqueous solution of a hydroxylamine-containing compound, a non-ionic or low-anionic polyacrylamide emulsion and an oil phase with an emulsifier to obtain the emulsion composition, wherein the hydroxylamine-containing compound is selected from hydroxylamine hydrochloride, hydroxylamine acetate, hydroxylamine propionate, hydroxylamine sulphate, and hydroxylamine free base;
3) adjusting temperature at 20.0 ± 5.0 °C and adding hydrophilic surfactants to the emulsion composition to invert the phases of the emulsion composition, followed by adding a stabilizing mixture.

In the context of the present invention, the alkaline hydrolysis of amides of carboxylic acids, such as polyacrylamide emulsion, takes place when the condition is met, such as a pH greater than 7. The result of alkaline hydrolysis of amides of carboxylic acids is the formation of carboxylic acid salts and ammonia. Alkaline hydrolysis is an irreversible reaction.

Another aspect of the present invention provides a method for preparing a hydroxamic acid-modified emulsion composition based on polyacrylamide, the method comprising
a) Preparing a first mixture comprising the steps of
   - sequentially adding into a first reactor vessel the following compounds:
      ∘ 0.20÷7.00 wt. % of demineralized water,
      ∘ 0.20÷25.00 wt. % of 0.5÷7.5M solution of hydroxylamine-containing compound selected from hydroxylamine hydrochloride, hydroxylamine acetate, hydroxylamine propionate, hydroxylamine sulphate, or hydroxylamine free base,
      ∘ 0.50÷3.00 wt. % branched C₈-C₁₆ alkoxylated fatty alcohols,
      ∘ 0.05÷0.45 wt. % of 4÷20M solution of sodium hydroxide,
      ∘ 6.00÷50.00 wt. % of a polyacrylamide emulsion with low anionic charge density or of a non-ionic polyacrylamide emulsion,
      while maintaining constant pH at 10.5 to 12.5, preferably at pH 11.0 to 11.6,
   - followed by isothermal exposure of the resulting mixture at a temperature of 15÷60 °C, preferably 25÷35 °C, during a suitable period of time, preferably during 1 to 6 hours or 3 to 5 hours,
   - sequentially further adding into the first rector
      ∘ 3.0÷15.0 wt. % of oil based on highly refined hydrocarbons,
      ∘ 0.05÷1.0 wt. % surfactant, and
      ∘ 1.4÷25.0 wt. % of 4÷20M solution of an alkaline compound selected from sodium hydroxide, potassium hydroxide or ammonium hydroxide,
      o under constant stirring,
   - heating up to 60÷100 °C, preferably up to 60÷80 °C, and maintaining said temperature until the mixture in the first reactor reaches a pH of 10.5 to 12.5, preferably of 11.0 to 11.6,
   - cooling to 25÷35 °C;
b) Preparing a second mixture comprising the steps of
   - sequentially adding into a second reactor vessel the following compounds:
      ∘ 10.0÷50.0 wt. % polyacrylamide emulsion with a high anionic charge,
      ∘ 6.0÷25.0 wt. % oils based on refined hydrocarbons,
      ∘ 0.5÷3.0 wt. % branched C₈-C₁₆ alkoxylated fatty alcohols,
      ∘ 0.05÷4.0 wt. % surfactant, and
      ∘ 2.0÷19.0 wt. % of a 4÷20M solution of an alkaline compound selected from sodium hydroxide, potassium hydroxide or ammonium hydroxide,
   - heating up to 60÷100 °C, preferably up to 60÷80 °C, and maintaining said temperature until the mixture in the second rector reaches a pH value of 10.5 to 12.5, preferably of 11.0 to 11.6,
   - cooling to 25÷35 °C;
c) mixing 10.0÷30 wt. % of the first mixture with 30÷50 wt. % of the second mixture;
d) adding 1.0÷50.0 wt. % of a water solution of a stabilizing mixture;
e) adding 1.0÷5.0 wt. % of linear C₈-C₁₆ alkoxylated fatty alcohols;
f) adding water, preferably demineralized water, q.s. to 100%.

In the context of the present invention, the alkaline hydrolysis of amides of carboxylic acids, such as polyacrylamide emulsion, takes place when the condition is met, such as a pH greater than 7. The result of alkaline hydrolysis of amides of carboxylic acids is the formation of carboxylic acid salts and ammonia. Alkaline hydrolysis is an irreversible reaction.

In the context of the present invention, the branched C₈-C₁₆ alkoxylated fatty alcohols are compounds formed by ethoxylation and/or propoxylation of fatty alcohols (i.e. ethoxylated or propoxylated fatty alcohols) and can be selected from the group comprising ethoxylated isotridecanol and branched alpha-tridecyl-omega-hydroxy-poly(oxy-1,2-ethanediyl). Such compounds are known as Lutensol TO3 (BASF), Rokanol IT3 (PCC Exxol), MARLIPAL O 13/30 (Sasol).

In the context of the present invention, polyacrylamide emulsions with low anionic charge density or high-anionic charge density as well as non-ionic polyacrylamide emulsions are known in the art and are typically aqueous solutions of acrylamide polymers, such as polyacrylamide, acrylamide sodium acrylate copolymer, copolymer of acrylamide and sodium acrylate, in emulsion form. Such polyacrylamide emulsions are typically Flopam EM235 (SNF), Flopam EM635, Sinofloc 991, SINOFLOC 993, SINOFLOC 945 (Sinofloc Chemical Ltd.); HANFLOC HA-Series (Hansol Chemical Co., Ltd). Typically, polyacrylamide emulsion is prepared by dispersion or inverse emulsion polymerization, which is a form of polyacrylamide liquid.

Anionic polyacrylamide (APAM), with low or high anionic charge, is a polyacrylamide that shows electronegative charge and that contains functional groups of sulfonic acid, phosphoric acid or carboxylic acid. Polyacrylamides of a low anionic charge or high anionic charge can be determined with methods known in the art.

In the context of the present invention, "an oil phase" or "an oil based on (highly) refined hydrocarbons" is any mineral oil that is refined petroleum-based hydrocarbons. Mineral oil is any of various colourless, odourless, light mixtures of higher alkanes from a mineral source, particularly a distillate of petroleum. Usually, the mineral oil is selected from transparent deep-purified naphthene-paraffin distillate fractions of hydrocarbons with a low content of polycyclic aromatic, sulfur- and nitrogen-containing compounds, heavy metals and without resinous substances. Typically, an oil or an oil phase is a white mineral oil, such as Vaseline oil (hydrotreated light petroleum distillate, petrolatum).

In the context of the present invention, "surfactant", such as "hydrophilic non-ionic surfactant" is synthetic, water-soluble and water-dispersible non-ionic detergent, such as linear and branched alcohol ethoxylated or their mix. A typical surfactant is alkylpolyglucosides, typically selected from aqueous solutions of alkyl polyglucosides based on natural, plant origin fatty alcohol with C₄-C₁₂ carbon chain, such as Glucopon^{™} 100DK, Glucopon^{™} 225DK, and Glucopon^{™} 215UP.

In the context of the present invention, "emulsifier" such as "a hydrophobic (non-ionic) emulsifier" is preventing liquids, that normally don't mix, from separating. Typical "emulsifiers" used in the present invention are branched C₈-C₁₆ alkoxylated fatty alcohols, compounds formed by ethoxylation and/or propoxylation of fatty alcohols (i.e. ethoxylated or propoxylated fatty alcohols) and can be selected from the group comprising ethoxylated isotridecanol and branched alpha-tridecyl-omega-hydroxy-poly(oxy-1,2-ethanediyl). Such compounds are known as Lutensol TO3 (BASF), Rokanol IT3 (PCC Exxol), MARLIPAL O 13/30 (Sasol).

In the context of the present invention, "stabilizing mixture" contains antioxidizing compounds and pH stabilizers such as DEHA, sodium or potassium thiosulphate, sodium or potassium carbonate. A stabilizer mixture typically further contains an aqueous solution of salts of sulfur- and carbon-containing acids, and a stabilizer based on polyols, such as propanetriol-1,2,3 (glycerol), hexane-1,2,3,4,5,6-hexol, propane-1,2-diol (propylene glycol) or ethanediol-1,2 (ethylene glycol). The quantitative ratio of the components in the stabilizing mixture may vary depending on the requirements for rheological characteristics of the emulsion composition and the storage conditions. Typically, in the context of the present invention the stabilizing mixture contains 0.50-2.50 wt. % sodium thiosulphate, 2.00-3.50 wt. % sodium carbonate, 13.00-22.00 wt. % glycerol, 10.00-17.00 wt. % of 0.5M alpha-tocopherol solution, q.s. to 100% demineralized water.

The method of the present invention and the ratio of the initial components make possible to obtain a composition of a polyacrylamide-based emulsion modified with hydroxamic acid, which provides (1) an increase in the rate of separation of the solid phase from the aluminate solution; (2) high purity of the aluminate solution; (3) easy pumping and dosing, speed of obtaining working solutions; (4) lower consumption of hydroxylamine-containing reagent and stability during storage in variable temperature conditions.

The ratio of different components the composition ensures the constancy and efficiency of the solid phase separation process and clarification of the aluminate solution in the Bayer process in a significantly wider range of process parameters and variable mineralogical ratios of processed bauxites.

Thus, each feature and set of features of the proposed invention is aimed at solving the problem of creating an effective composition for separating the solid phase in the Bayer process and obtaining a high-purity aluminate solution.

Distinctive features of the present invention are the following:
- the production of a composition of a polyacrylamide emulsion modified with hydroxamic acid involves a hydroxylamine-containing reagent, such as a 50% aqueous solution of a hydroxylamine free base or stabilized aqueous solutions of hydroxylamine salts, such as sulphate, chloride, acetate, propionate and others; as a carrier of reaction centres;
- a commercial form of polyacrylamide emulsion with a molecular weight within 1·10-5÷1·10-7 g/mol, preferably more than 1·10-6 g/mol, and for the production of a hydroxamate polymer, it contains mainly polyacrylamide with an anionic charge density from 0 to 20%, and for the production of polyacrylamide with a high content of carboxyl groups it contains polyacrylamide with an anionic charge density in the range from 35 to 50% or higher; as components of the stabilizing mixture polyols can be used (1,2,3-propanetriol or hexane-1,2,3,4,5,6-hexol, or propane-1,2-diol or ethanediol-1,2), antioxidants, sodium sulfidotrioxosulphate, medium salt sodium or potassium and carbonaceous acid and auxiliary nonionic surfactant C₄-C₈ alkylpolyglucosides;
- the preparation of a hydroxamic acid-modified composition based on polyacrylamide emulsion consists of the following operations:: interaction of a polyacrylamide emulsion with an anionic charge density from 0 to 20% with a hydroxylamine-containing reagent with a preliminary reverse phase inversion; interactions of a polyacrylamide emulsion with an anionic charge density from 35 to 50% or higher with an excess of an alkaline reagent solution when adding surfactant; formation of a mixture of products in a ratio of 1:4 to 1:1, respectively; addition of a stabilizing mix and branched C₈-C₁₆ alkoxylated fatty alcohols.

Another aspect of the present invention provides a hydroxamic acid-modified emulsion composition based on polyacrylamide, comprising or consisting of (wt. %):
- a mixture of emulsion polyacrylamide products: 35% - 80%
- an oil phase and an emulsifier: 5% - 50%
- a stabilizer mixture: 15% - 50%,
   wherein
- the mixture of emulsion polyacrylamide products consists of
   ∘ a first emulsion polyacrylamide product with a high content of carboxyl functional groups prepared by alkaline hydrolysis of high-anionic polyacrylamide emulsion followed by addition of an oil phase and an emulsifier;
   ∘ a second emulsion polyacrylamide product prepared by contacting a hydroxylamine-containing compound with a non-ionic or low-anionic polyacrylamide emulsion in an alkaline medium, preferably pH 11.0 ± 1.5, followed by addition of an oil phase and an emulsifier, wherein the hydroxylamine-containing compound is selected from hydroxylamine hydrochloride, hydroxylamine acetate, hydroxylamine propionate, hydroxylamine sulphate, and hydroxylamine free base, and wherein the hydroxylamine-containing compound is preliminary mixed with water, an oil phase and a hydrophobic non-ionic emulsifier before contacting with the non-ionic or weakly anionic polyacrylamide emulsion; and
   wherein the ration of the second emulsion polyacrylamide product and the first emulsion polyacrylamide product is 1:4 to 1:1;
- the oil phase and the emulsifier are in the ratio from 40:1 to 5:1.

According to the present invention, it is possible to obtain a hydroxamic acid-modified emulsion composition based on polyacrylamide, which provides (1) an increase in the rate of separation of the solid phase from the aluminate solution; (2) high purity of the aluminate solution; (3) easy pumping and dosing, increased speed of obtaining working solutions; (4) lower consumption of hydroxylamine-containing reagent and stability during storage at variable temperature conditions.

### EXAMPLES

Non-limiting examples of the method of the invention for producing hydroxamic acid-modified emulsion composition based on polyacrylamide are provided herein.

### Example 1

The first reactor is loaded sequentially with 0.25 wt. % demineralized water (10), 0.42 wt. % HAFB 50%, 0.83 wt. % hydrophobic phase inversion agent Lutensol TO3 (8), 0.08 wt. % of 18,9M sodium hydroxide solution (5), 8.33 wt. % Flopam EM235, with a constant PH adjustment in the range from 11.0 to 11.5 by adding a 0,12 wt. % of 18,9M sodium hydroxide solution (5), followed by isothermal exposure of the resulting mixture at a temperature of 30 °C, after which 4.17 wt. % of white oil (3), Glucopon 100DK surfactant (9) in an amount of 0.08 wt. % and a 1.83 wt. % of 18,9M sodium hydroxide solution (5) are sequentially added into the mixture while constantly stirring, and the temperature is raised to 60 °C and kept until the mixture reaches a pH of 11.6, after which it is cooled to a temperature of 30 °C.

The second reactor is loaded sequentially with 33.33 wt. % Flopam EM 635 (2), 8.33 wt. % white oil (3), 1.25 wt. % hydrophobic phase inversion agent Lutensol TO3 (8), 0.10 wt. % Glucopon 100DK surfactant (9) and 4.17 wt. % of 18,9M sodium hydroxide solution (5), followed by reactor temperature raise to 80 °C and kept until the mixture reaches a pH of 11.6, after which it is cooled to a temperature of 30 °C.

To the emulsion product obtained in the second reactor, the entire amount of the emulsion product obtained in the first reactor is added and a solution prepared from 1.67 wt. % sodium thiosulphate, 3.33 wt. % sodium carbonate, 14.87 wt. % glycerol, 15.08 wt. % of 0.5M alpha-tocopherol solution, after which 1.75 wt. % of the hydrophilic phase inversion agent Plurafac LF221 (alkoxylated fatty alcohol, the low-foaming non-ionic surfactant which consists of alkoxylated, predominantly unbranched fatty alcohols, and it contains higher alkene oxides alongside ethylene oxide) is added. After stopping the mixer and cooling, the finished hydroxamic acid-modified emulsion composition based on polyacrylamide, which was obtained through a two-reactor scheme, is unloaded from the reactor and can be stored at temperatures from -20 to + 30 °C in an environment protected from solar radiation for 12 months.

### Example 2

The first reactor is loaded sequentially with 0.68 wt. % demineralized water (10), 1.19 wt. % HAFB 50%, 1.44 wt. % hydrophobic phase inversion agent Lutensol TO3 (8), 0.15 wt. % of 18,9M sodium hydroxide solution (5), 16.97 wt. % Flopam EM235, with a constant PH adjustment in the range from 11.0 to 11.5 by adding a solution of 0.20 wt. % of 18,9M sodium hydroxide solution (5), followed by isothermal exposure of the resulting mixture at a temperature of 30 °C, after which 5.94 wt. % of white oil (3), Glucopon 100DK surfactant (9) in an amount of 0.12 wt. % and a solution of 4.07 wt. % of 18,9M sodium hydroxide solution (5) are sequentially added into the mixture while constantly stirring, and the temperature is raised to 60 °C and kept until the mixture reaches a pH of 11.6, after which it is cooled to a temperature of 30 °C.

The second reactor is loaded sequentially with 25.46 wt. % Flopam EM 635 (2), 3.39 wt. % white oil (3), 0.85 wt. % hydrophobic phase inversion agent Lutensol TO3 (8), 0.07 wt. % surfactant (9) and 3.39 wt. % of 18,9M sodium hydroxide solution (5), followed by reactor temperature raise to 80 °C and kept until the mixture reaches a pH of 11.6, after which it is cooled to a temperature of 30 °C.

To the emulsion product obtained in the second reactor, the entire amount of the emulsion product obtained in the first reactor is added and a solution prepared from 0.85 wt. % sodium thiosulphate, 2.55 wt. % sodium carbonate, 19.26 wt. % glycerol, 11.97 wt. % alpha-tocopherol of 0.5M alpha-tocopherol solution is loaded at constant stirring, after which 1.44 wt. % of the hydrophilic phase inversion agent Plurafac LF221 (alkoxylated fatty alcohol, the low-foaming non-ionic surfactant which consists of alkoxylated, predominantly unbranched fatty alcohols, and it contains higher alkene oxides alongside ethylene oxide) is added. After stopping the mixer and cooling, the finished hydroxamic acid-modified emulsion composition based on polyacrylamide, which was obtained through a two-reactor scheme, is unloaded from the reactor and can be stored at temperatures from -20 to + 30 °C in an environment protected from solar radiation for 12 months.

## Claims

1. A method for preparing hydroxamic acid-modified emulsion composition based on polyacrylamide, the method comprising
1) preparing a first emulsion polyacrylamide product with a high content of carboxyl functional groups by alkaline hydrolysis of high-anionic polyacrylamide emulsion followed by addition of an oil phase and an emulsifier;
2) preparing a second emulsion polyacrylamide product by contacting a hydroxylamine-containing compound with a non-ionic or low-anionic polyacrylamide emulsion in an alkaline medium followed by addition of an oil phase and an emulsifier, wherein the hydroxylamine-containing compound is selected from hydroxylamine hydrochloride, hydroxylamine acetate, hydroxylamine propionate, hydroxylamine sulphate, and hydroxylamine free base, and wherein the hydroxylamine-containing compound is preliminary mixed with water, an oil phase and a hydrophobic non-ionic emulsifier before contacting with the non-ionic or low-anionic polyacrylamide emulsion;
3) mixing the first emulsion product with the second emulsion product to obtain the emulsion composition;
4) inverting the emulsion composition with hydrophilic non-ionic surfactants and adding a stabilizing mixture.

2. A method for preparing hydroxamic acid-modified emulsion composition based on polyacrylamide, wherein the method is carried out in one reactor, wherein the method comprises
1) preparing an emulsion polyacrylamide product with a high content of carboxyl groups by alkaline hydrolysis of high-anionic polyacrylamide emulsion containing an oil phase and a hydrophobic emulsifier;
2) in an alkaline medium, sequentially adding to the emulsion polyacrylamide product of step 1) an aqueous solution of a hydroxylamine-containing compound, a non-ionic or low-anionic polyacrylamide emulsion and an oil phase with an emulsifier to obtain the emulsion composition, wherein the hydroxylamine-containing compound is selected from hydroxylamine hydrochloride, hydroxylamine acetate, hydroxylamine propionate, hydroxylamine sulphate, and hydroxylamine free base;
3) adjusting temperature at 20.0 ± 5.0 °C and adding hydrophilic surfactants to the emulsion composition to invert the phases of the emulsion composition, followed by adding a stabilizing mixture.

3. The method of any one of claims 1-2, wherein surfactants are alkylpolyglucosides,

4. A hydroxamic acid-modified emulsion composition based on polyacrylamide consisting of (wt. %):
• a mixture of emulsion polyacrylamide products: 35% - 80%
• an oil phase and an emulsifier: 5% - 50%
• a stabilizer mixture: 15% - 50%,
wherein
• the mixture of emulsion polyacrylamide products consists of
∘ a first emulsion polyacrylamide product with a high content of carboxyl functional groups prepared by alkaline hydrolysis of high-anionic polyacrylamide emulsion followed by addition of an oil phase and an emulsifier;
∘ a second emulsion polyacrylamide product prepared by contacting a hydroxylamine-containing compound with a non-ionic or low-anionic polyacrylamide emulsion in an alkaline medium followed by addition of an oil phase and an emulsifier, wherein the hydroxylamine-containing compound is selected from hydroxylamine hydrochloride, hydroxylamine acetate, hydroxylamine propionate, hydroxylamine sulphate, and hydroxylamine free base, and wherein the hydroxylamine-containing compound is preliminary mixed with water, an oil phase and a hydrophobic non-ionic emulsifier before contacting with the non-ionic or weakly anionic polyacrylamide emulsion; and
wherein the ration of the second emulsion polyacrylamide product and the first emulsion polyacrylamide product is 1:4 to 1:1;
• the oil phase and the emulsifier are in the ratio from 40:1 to 5:1.

5. The method of any one of claims 1-3 and the hydroxamic acid-modified emulsion composition of claim 4, wherein the oil phase is Vaseline oil.

6. The method of any one of claims 1-3 and 5, and the hydroxamic acid-modified emulsion composition of any one of claims 4-5, wherein the stabilizing mixture contains 0.50-2.50 wt. % sodium thiosulphate, 2.00-3.50 wt. % sodium carbonate, 13.00-22.00 wt. % glycerol, 10.00-17.00 wt. % of 0.5M alpha-tocopherol solution, q.s. to 100% demineralized water.

7. The method of any one of claims 1-3, 5 and 6, and the hydroxamic acid-modified emulsion composition of any one of claims 4-6, wherein emulsifiers are branched C₈-C₁₆ alkoxylated fatty alcohols.

## Patentansprüche

1. Verfahren zur Herstellung einer mit Hydroxamsäure modifizierten Emulsionszusammensetzung auf Polyacrylamidbasis, wobei das Verfahren umfasst:
1) Herstellen eines ersten Emulsions-Polyacrylamid-Produkts mit einem hohen Gehalt an funktionellen Carboxylgruppen durch alkalische Hydrolyse einer stark anionischen Polyacrylamid-Emulsion, gefolgt von der Zugabe einer Ölphase und eines Emulgators;
2) Herstellen eines zweiten Emulsions-Polyacrylamid-Produkts durch Inkontaktbringen einer Hydroxylamin enthaltenden Verbindung mit einer nicht-ionischen oder schwach anionischen Polyacrylamid-Emulsion in einem alkalischen Medium, gefolgt von der Zugabe einer Ölphase und eines Emulgators, wobei die Hydroxylamin enthaltende Verbindung aus Hydroxylaminhydrochlorid, Hydroxylaminacetat, Hydroxylaminpropionat, Hydroxylaminsulfat und Hydroxylamin als freie Base ausgewählt ist, und wobei die Hydroxylamin enthaltende Verbindung vorab mit Wasser, einer Ölphase und einem hydrophoben nichtionischen Emulgator gemischt wird, bevor sie mit der nichtionischen oder schwach anionischen Polyacrylamid-Emulsion in Kontakt gebracht wird;
3) Mischen des ersten Emulsionsprodukts mit dem zweiten Emulsionsprodukt, um die Emulsionszusammensetzung zu erhalten;
4) Invertieren der Emulsionszusammensetzung mit hydrophilen nicht-ionischen Tensiden und Hinzufügen einer stabilisierenden Mischung.

2. Verfahren zur Herstellung einer mit Hydroxamsäure modifizierten Emulsionszusammensetzung auf Polyacrylamidbasis, wobei das Verfahren in einem Reaktor durchgeführt wird, wobei das Verfahren umfasst
1) Herstellen eines Emulsions-Polyacrylamid-Produkts mit einem hohen Gehalt an Carboxylgruppen durch alkalische Hydrolyse einer stark anionischen Polyacrylamid-Emulsion, die eine Ölphase und einen hydrophoben Emulgator enthält;
2) Zugeben einer wässrigen Lösung einer Hydroxylamin enthaltenden Verbindung, einer nicht-ionischen oder schwach anionischen Polyacrylamid-Emulsion und einer Ölphase mit einem Emulgator nacheinander zu dem Polyacrylamid-Produkt aus Schritt 1) in einem alkalischen Medium, um die Emulsionszusammensetzung zu erhalten, wobei die Hydroxylamin enthaltende Verbindung ausgewählt ist aus Hydroxylaminhydrochlorid, Hydroxylaminacetat, Hydroxylaminpropionat, Hydroxyaminsulfat und Hydroxylamin als freie Base,
3) Einstellen der Temperatur auf 20,0 ± 5,0 °C und Zugeben von hydrophilen Tensiden zu der Emulsionszusammensetzung, um die Phasen der Emulsionszusammensetzung zu invertieren, gefolgt von der Zugabe einer stabilisierenden Mischung.

3. Verfahren nach einem der Ansprüche 1 bis 2, wobei die Tenside Alkylpolyglucoside sind.

4. Hydroxamsäure modifizierte Emulsionszusammensetzung auf Polyacrylamidbasis, bestehend aus (Gew.-%):
• einer Mischung aus Emulsions-Polyacrylamid-Produkten: 35 % - 80 %
• einer Ölphase und einem Emulgator: 5 % - 50 %
• einer Stabilisatormischung: 15 % - 50 %,
wobei
• die Mischung aus Emulsions-Polyacrylamid-Produkten besteht aus
∘ einem ersten Emulsions-Polyacrylamid-Produkt mit einem hohen Gehalt an funktionellen Carboxylgruppen, hergestellt durch alkalische Hydrolyse einer stark anionischen Polyacrylamid-Emulsion, gefolgt von der Zugabe einer Ölphase und eines Emulgators;
∘ einem zweiten Emulsions-Polyacrylamid-Produkt, hergestellt durch Inkontaktbringen einer Hydroxylamin enthaltenden Verbindung mit einer nichtionischen oder schwach anionischen Polyacrylamid-Emulsion in einem alkalischen Medium, gefolgt von der Zugabe einer Ölphase und eines Emulgators, wobei die Hydroxylamin enthaltende Verbindung aus Hydroxylaminhydrochlorid, Hydroxylaminacetat, Hydroxylaminpropionat, Hydroxylaminsulfat und Hydroxylamin als freie Base ausgewählt ist, und wobei die Hydroxylamin enthaltende Verbindung vorab mit Wasser, einer Ölphase und einem hydrophoben nichtionischen Emulgator gemischt wird, bevor sie mit der nichtionischen oder schwach anionischen Polyacrylamid-Emulsion in Kontakt gebracht wird; und
wobei das Verhältnis des zweiten Emulsions-Polyacrylamid-Produkts und des ersten Emulsions-Polyacrylamid-Produkts 1:4 bis 1:1 beträgt;
• die Ölphase und der Emulgator im Verhältnis von 40:1 bis 5:1 vorliegen.

5. Verfahren nach einem der Ansprüche 1 bis 3 und Hydroxamsäure modifizierte Emulsionszusammensetzung nach Anspruch 4, wobei die Ölphase Vaselineöl ist.

6. Verfahren nach einem der Ansprüche 1 bis 3 und 5 und Hydroxamsäure modifizierte Emulsionszusammensetzung nach einem der Ansprüche 4 bis 5, wobei die stabilisierende Mischung 0,50 bis 2,50 Gew.-% Natriumthiosulfat, 2,00 bis 3,50 Gew.-% Natriumcarbonat, 13,00 bis 22,00 Gew.-% Glycerin, 10,00 bis 17,00 Gew.-% einer 0,5 M Alpha-Tocopherol-Lösung, und entmineralisiertes Wasser q.s. auf 100 % enthält.

7. Verfahren nach einem der Ansprüche 1-3, 5 und 6 und Hydroxamsäure modifizierte Emulsionszusammensetzung nach einem der Ansprüche 4 bis 6, wobei die Emulgatoren verzweigte C8-C16-alkoxylierte Fettalkohole sind.

## Revendications

1. Procédé de préparation d'une composition d'émulsion modifiée par de l'acide hydroxamique à base de polyacrylamide, le procédé comprenant
1) la préparation d'un premier produit polyacrylamide en émulsion à haute teneur en groupes fonctionnels carboxyle par hydrolyse alcaline d'une émulsion de polyacrylamide à haute charge anionique, suivie de l'ajout d'une phase huileuse et d'un émulsifiant ;
2) la préparation d'un deuxième produit polyacrylamide en émulsion par mise en contact d'un composé contenant de l'hydroxylamine avec une émulsion de polyacrylamide non-ionique ou faiblement anionique dans un milieu alcalin, suivie de l'ajout d'une phase huileuse et d'un émulsifiant, dans lequel le composé contenant de l'hydroxylamine est choisi parmi le chlorhydrate d'hydroxylamine, l'acétate d'hydroxylamine, le propionate d'hydroxylamine, le sulfate d'hydroxylamine et la base libre d'hydroxylamine, et dans lequel le composé contenant de l'hydroxylamine est préalablement mélangé avec de l'eau, une phase huileuse et un émulsifiant non-ionique hydrophobe avant d'être mis en contact avec l'émulsion de polyacrylamide non ionique ou faiblement anionique ;
3) mélanger le premier produit d'émulsion avec le deuxième produit d'émulsion pour obtenir la composition d'émulsion ;
4) inverser la composition d'émulsion avec des tensioactifs hydrophiles non-ioniques et ajouter un mélange stabilisant.

2. Procédé de préparation d'une composition d'émulsion modifiée par de l'acide hydroxamique à base de polyacrylamide, dans lequel le procédé est mis en oeuvre dans un seul réacteur, le procédé comprenant
1) la préparation d'un produit polyacrylamide en émulsion à haute teneur en groupes carboxyle par hydrolyse alcaline d'une émulsion de polyacrylamide hautement anionique contenant une phase huileuse et un émulsifiant hydrophobe ;
2) dans un milieu alcalin, ajouter séquentiellement au produit polyacrylamide en émulsion de l'étape 1) une solution aqueuse d'un composé contenant de l'hydroxylamine, une émulsion de polyacrylamide non-ionique ou faiblement anionique et une phase huileuse avec un émulsifiant pour obtenir la composition d'émulsion, dans laquelle le composé contenant de l'hydroxylamine est choisi parmi le chlorhydrate d'hydroxylamine, l'acétate d'hydroxylamine, le propionate d'hydroxylamine, le sulfate d'hydroxylamine et la base libre d'hydroxylamine ;
3) ajuster la température à 20,0 ± 5,0 °C et ajouter des tensioactifs hydrophiles à la composition d'émulsion pour inverser les phases de la composition d'émulsion, puis ajouter un mélange stabilisant.

3. Procédé selon l'une quelconque des revendications 1 à 2, dans lequel les tensioactifs sont des alkylpolyglucosides.

4. Composition d'émulsion modifiée par un acide hydroxamique à base de polyacrylamide, comprenant (en % en poids) :
• un mélange de produits polyacrylamides en émulsion : 35 % - 80 %
• une phase huileuse et un émulsifiant : 5 % à 50 %
• un mélange stabilisant : 15 % à 50 %,
dans laquelle
• le mélange de produits à base d'émulsion de polyacrylamide consiste en
o un premier produit à base de polyacrylamide en émulsion présentant une teneur élevée en groupes fonctionnels carboxyles préparé par hydrolyse alcaline d'une émulsion de polyacrylamide à forte charge anionique, suivie de l'ajout d'une phase huileuse et d'un émulsifiant ;
o un deuxième produit à base de polyacrylamide en émulsion préparé par mise en contact d'un composé contenant de l'hydroxylamine avec une émulsion de polyacrylamide non-ionique ou faiblement anionique dans un milieu alcalin, suivie de l'ajout d'une phase huileuse et d'un émulsifiant, dans lequel le composé contenant de l'hydroxylamine est choisi parmi le chlorhydrate d'hydroxylamine, l'acétate d'hydroxylamine, le propionate d'hydroxylamine, le sulfate d'hydroxylamine et la base libre d'hydroxylamine, et dans lequel le composé contenant de l'hydroxylamine est préalablement mélangé avec de l'eau, une phase huileuse et un émulsifiant non-ionique hydrophobe avant mise en contact avec l'émulsion de polyacrylamide non-ionique ou faiblement anionique ; et dans lequel le rapport entre le produit de polyacrylamide de la deuxième émulsion et le produit de polyacrylamide de la première émulsion est compris entre 1:4 et 1:1 ;
• la phase huileuse et l'émulsifiant sont dans un rapport compris entre 40:1 et 5:1.

5. Procédé selon l'une quelconque des revendications 1 à 3 et composition d'émulsion modifiée par l'acide hydroxamique selon la revendication 4, dans lequel la phase huileuse est de l'huile de vaseline.

6. Procédé selon l'une quelconque des revendications 1 à 3 et 5, et composition d'émulsion modifiée par l'acide hydroxamique selon l'une quelconque des revendications 4 à 5, dans laquelle le mélange stabilisant contient 0,50 à 2,50 % en poids de thiosulfate de sodium, 2,00 à 3,50 % en poids de carbonate de sodium, 13,00 à 22,00 % en poids de glycérol, 10,00 à 17,00 % en poids de solution d'alpha-tocophérol 0,5 M, q.s. à 100 % d'eau déminéralisée.

7. Procédé selon l'une quelconque des revendications 1 à 3, 5 et 6, et composition d'émulsion modifiée par de l'acide hydroxamique de l'une quelconque des revendications 4 à 6, dans laquelle les émulsifiants sont des C₈-C₁₆ alcools gras alcoxylés ramifiés.
